(19) **Europäisches Patentamt**

**European Patent Office**

**Office européen des brevets**

(11) **EP 1 327 852 A1**

(12) **EUROPEAN PATENT APPLICATION**

(43) Date of publication:
16.07.2003 Bulletin 2003/29

(51) Int Cl.⁷: **G01B 11/30**, G01B 11/25

(21) Application number: 02425008.6

(22) Date of filing: 11.01.2002

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **CENTRO SVILUPPO MATERIALI S.p.A.<br>00129 Roma (IT)** | (72) Inventor: **Moroli, Valerio,<br>Ctr. Sviluppo Materiali S.p.A.<br>00129 Roma (IT)**<br><br>(74) Representative: **Leone, Mario et al<br>Società Italiana Brevetti S.p.A.<br>Piazza di Pietra 39<br>00186 Roma (IT)** |

(54) **Apparatus for the measuring of the surface flatness, in particular for metallic strips**

(57)     Apparatus for the measuring of the flatness of reflecting surfaces, in particular of metallic strips, providing a reduction of the error due to shifting and vibration of the strip, the option of working out a full report on the deviation from flatness on all the strip fibres, edges included, and an elevated sensitivity; and comprising: a linear light source (4) diffusing a set of linear light beams all lying onto the same plane (5) incidenting on a surface (2) according to a line (6); means for capturing the image of the reflected line (6); and means for processing the captured image.

**fig.2**

EP 1 327 852 A1

**Description**

The present invention refers to an apparatus for the measuring of the surface flatness, measuring meant as monitoring the deviation of the surface shape from that of an ideal geometric plane.

This measuring is particularly important in the industrial manufacturing processes of flat members, where flatness is an important qualitative parameter and yet a continuous measuring is required.

An instance of an alike industrial process is that concerning the continuous manufacturing of metallic strips.

In this embodiment, as well as in others, this measuring can prove useful to control the quality of the product as well as the effectiveness and the compliance of the production processes.

In several contexts, due to various structural reasons, optical-type measuring apparatuses and methods have been developed which do not provide the contact between the measuring instrument and the surface to be measured.

The standard apparatuses for the optical measuring of the strip shape use, for the sensing thereof, an array of distance sensors located on a line transversal to the feed direction. Each sensor senses the shifting of the strip, and subsequently the analysis of the resulting shape enables to compute the flatness deviation.

This type of systems, valid under static conditions, is affected by the strip vibrations and shiftings, which are interpreted as deviations from the ideal flatness, causing false alarms.

The vibrations, the shiftings and the effects of the traction to which, e.g., the metallic strips are subjected, are unavoidable and substantially unforeseeable in their effects.

The technical problem underlying the present invention is to provide an apparatus for the measuring of the flatness capable of overcoming the drawback cited with reference to the known art.

This problem is solved by an apparatus as abovespecified, comprising:

* a linear light source diffusing a set of linear light beams, all lying onto the same plane, incidenting on a surface according to a line;
* means for capturing the image of the reflected line; and
* means for processing the captured image.

The main advantage of the apparatus according to the present invention lies in providing a flatness monitoring which be unaffected by the phenomena inducing the motion of the surface to be measured.

The present invention will hereinafter be described according to a preferred embodiment thereof, provided as a non-limiting example with reference to the following examples and to the attached drawings, wherein:

* figure 1 shows schematically and in perspective an apparatus according to the invention; and
* figure 2 is a sectional view of an apparatus of figure 1 applied to a process for the manufacturing of metallic strips.

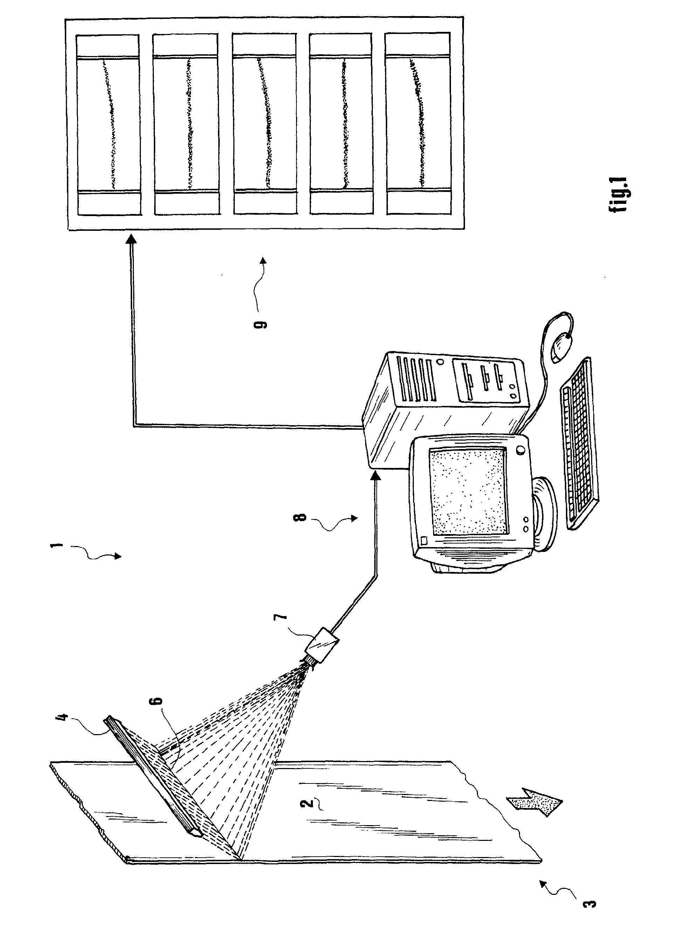

With reference to figure 1, an apparatus for the measuring of the surface flatness is indicated with 1. This apparatus 1 operates on a reflecting surface 2, in this example belonging to a metallic strip 3.

The apparatus 1 comprises a linear light source 4 located transversally to the feed direction of the strip 3, preferably perpendicularly thereto.

Moreover, this source 4 is parallel to the surface of the latter.

For 'linear light source' it is meant a plurality of linear, virtually point, light sources located along a rectilinear segment so that a set of linear light beams be diffused, each generated by the individual point light source and all lying onto the same plane.

LEDs, located on a suitable guide, could be employed as light sources.

Said planar light beam incidents onto the surface of the strip 3 according to a line 6 of a shape depending on the strip flatness. An ideal strip flatness would generate a straight line onto the strip surface.

The apparatus 1 comprises means for capturing the image of the reflected line 6 and means for processing the captured image.

In the present embodiment, these image capturing means comprises a camera 7 connected to a processor 8.

Said processing means measures the surface angle computing the entity of the distortion of the reflected line 6 from a rectilinear condition.

An image acquisition and processing system with a specific algorithm treats the camera image, computes the related fibre lengthening, evaluates the flatness indexes and outputs the report trends; moreover, the system is presettable for the network communication of the generated measures, to generate reports on the position of the individual strips on *Touch Screen*-type systems.

In the present embodiment of the apparatus, first of all the traction to which the strip is subjected is sensed to lie well below the value inducing the forced relieving thereof.

Hence, by optically sensing the strip shape, it becomes possible to evaluate the elongation of its constituent elementary fibres and the flatness indexes (I-Units) thereof, or to generate tailored indexes describing the distribution of the elongation onto the strip (edge, near-to-edge, centre elongation, etc.).

In figure 1, some exemplary sensings are indicated with 9.

In fact, the camera 7, exploiting the reflection of light from the linear light source 4, observes the deflections generated by the strip 3 as non-flat regions pass by.

With reference to the sensings 9, the images obtained observing the reflection of a light source at different instants in the presence of a strip having slightly non-flat sites onto the right-side edge are shown. Apparently, the non-flatness of the strip causes a deflection of the reflected image 6, as the surface 2 of the strip 3 angles differently from the strip feed angle; the observation under reflection provides a high sensitivity even for small strains of the strip 3.

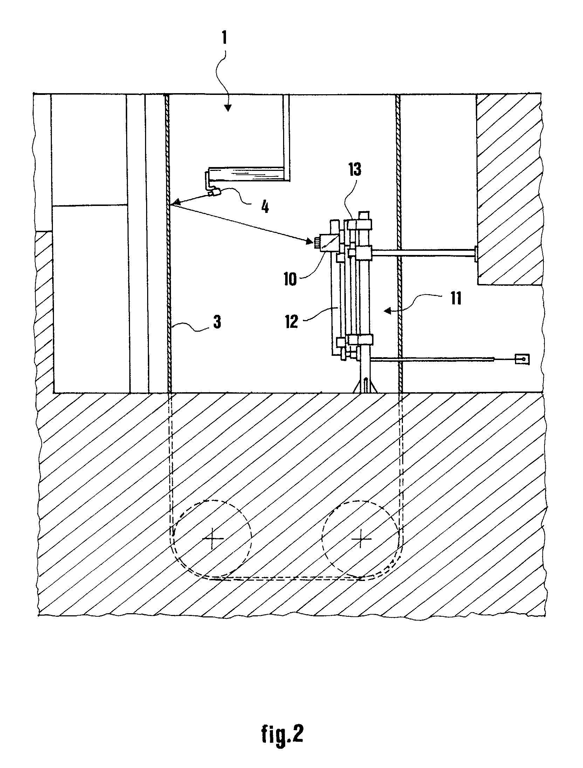

With reference to figure 2, the lighting and taking arrangement of the apparatus 1 in a metallurgical plant is illustrated.

The apparatus 1 is installed transversally to the line, on a vertical, and, optionally, on a horizontal descent section.

Due to the strict environmental limitations, the camera 7 is housed in an industrial case 10. The LED linear light source 4 is mounted on a supporting frame 11 comprising a guide 12 and means 13 for shifting the case 10 along the guide, in order to insert on-line and extract off-line the camera 7.

The apparatus further comprises an encoder, not shown, for the sensing of the position and of the rate of feed of the strip 3.

Hence, with the abovedescribed apparatus, the angle assumed by the strip 3 at the region thereof crossing the scanning line 6 is remarkably less affected by shiftings or vibrations. The sensing of the angles of the strip regions directly provides the value of the elongation thereof, as the presence of angled strip sections directly generates an elongation due to the deviation from the shortest crossing course.

In fact, the related elongation of each fibre of the strip may be expressed as:

$$\frac{L - X}{L}$$

where L is the rectified length of the fibre, and X is the measuring of the longitudinal section engaged by the non-rectilinear fibre. The expression may be explicitated as:

$$\frac{L - X}{L} = \frac{\int dL - \int dX}{L} = \frac{\int dL - \int \cos(\alpha) \cdot dL}{L} = \frac{\int (1 - \cos(\alpha)) \cdot dL}{L}$$

$\alpha$ being the deflection angle of the strip surface from the ideal flat condition. As $1-\cos(\alpha)$ may, for not overly high angles $\alpha$, be approximated with a reasonable accuracy:

$$1-\cos(\alpha) \cong \frac{1}{2} \cdot \alpha^2$$

therefore:

$$\frac{L - X}{L} \cong \frac{1}{2} \cdot \frac{\int \alpha^2 \cdot dL}{L} = \frac{1}{2} \cdot \overline{\alpha^2}$$

is attained, thereby demonstrating that the related fibre value elongation is directly referable to the mean quadratic value of the angle assumed by the strip surface.

Hence, the measuring system operates analysing the image yielded by the camera, extracting the position and the shape of the image of the reflected line 6 via the use of image processing methods. The singling out of the line enables, via trigonometric calculus, to compute the angle assumed by the strip at the region thereof crossing the reflected line 6. The sensitivity with which the angle of the strip generates deflections of the reflected line is remarkably high, thereby reducing the apparent line shifting effect due to shifting or vibration of the strip surface. Therefore, the method for the measuring of the position of the line in the image is remarkably robust and reliable, and, via the disclosed expression, it enables the entity of the related elongation, and therefore of the strip flatness, to be computed.

Moreover, the apparatus, using a camera, provides an elongation profile complete and distributed over the entire length of the strip, edges included, without merely describing the behaviour of a discrete number of fibres.

Hence, overall, the abovedescribed apparatus entails the following advantages:

* a reduction of the error due to strip shifting and vibration;
* the option to work out a full report on the deviation from flatness on all the strip fibres, edges included; and
* an elevated sensitivity.

To the abovedescribed apparatus a person skilled in the art, in order to meet further and contingent needs, could effect several further modifications and variations, all however falling within the protective scope of the present invention, as defined by the appended claims.

**Claims**

1. An apparatus for the measuring of the flatness of reflecting surfaces, in particular of metallic strips, **characterised in that** it comprises:

   * a linear light source (4) diffusing a set of linear light beams, all lying onto the same plane, incidenting on a surface (2) according to a line (6) ;
   * means for capturing the image of the reflected line (6); and
   * means for processing the captured image.

2. The apparatus according to claim 1, wherein the linear light source (4) is located transversally to the feed direction of a metallic strip (3).

3. The apparatus according to claim 1, wherein the linear light source (4) is parallel to said surface (2).

4. The apparatus according to claim 1, wherein the linear light source (4) comprises a plurality of linear, virtually point, light sources, located along a rectilinear segment.

5. The apparatus according to claim 4, wherein the linear light source (4) comprises a plurality of LEDs located on a suitable guide.

6. The apparatus according to claim 1, wherein said means for capturing and said means for processing comprises a camera (7) connected to a processor (8).

7. The apparatus according to claim 6, wherein the camera (7) is housed in an industrial case (10).

8. The apparatus according to claim 1, wherein the linear light source (4) is mounted on a supporting frame (11) comprising a guide (12) and means (13) for shifting the linear light source (4).

9. The apparatus according to claim 1, wherein said flatness is measured computing the angles assumed by the surface (2) of the metallic strip (3).

10. The apparatus according to claims 1 and 9, wherein said means for processing enable the measuring of the surface computing the entity of the distortions of the reflected line (6) from a rectilinear condition.

fig.1

EP 1 327 852 A1

fig.2

EP 1 327 852 A1

**European Patent Office**

**EUROPEAN SEARCH REPORT**

Application Number

EP 02 42 5008

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 290 096 A (ISHIKAWAJIMA-HARIMA JUKOGYO K.K.) 20 September 1972 (1972-09-20) | 1-4,6,9, 10 | G01B11/30 G01B11/25 |
| A | * introduction * * page 2, line 24 - line 58 * * page 2, line 77 - page 3, line 84; figures 1-3 * | 5 | |
| X | FR 2 725 512 A (SOLLAC S.A.) 12 April 1996 (1996-04-12) * page 4, line 1 - page 8, line 13; figures 1,2 * | 1-3,6,9, 10 | |
| X | EP 0 864 847 A (BETRIEBSFORSCHUNGSINSTITUT VDEH, INSTITUT F. ANGEWANDTE FORSCHUNG GMBH) 16 September 1998 (1998-09-16) * the whole document * * figures 1-4 * | 1,6,7,9, 10 | |
| X | US 3 976 382 A (OLA WESTBY) 24 August 1976 (1976-08-24) * column 4, line 11 - column 5, line 57; figures 1-3 * | 1-3,6, 8-10 | TECHNICAL FIELDS SEARCHED (Int.Cl.7) G01B |

The present search report has been drawn up for all claims

| Place of search | Date of completion of the search | Examiner |
|---|---|---|
| THE HAGUE | 27 May 2002 | Visser, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

7

## ANNEX TO THE EUROPEAN SEARCH REPORT
## ON EUROPEAN PATENT APPLICATION NO.

EP 02 42 5008

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2002

| Patent document cited in search report | | Publication date | Patent family member(s) | | Publication date |
|---|---|---|---|---|---|
| GB 1290096 | A | 20-09-1972 | NONE | | |
| FR 2725512 | A | 12-04-1996 | FR | 2725512 A1 | 12-04-1996 |
| EP 864847 | A | 16-09-1998 | DE | 19709992 C1 | 01-10-1998 |
| | | | DE | 19758466 A1 | 15-10-1998 |
| | | | EP | 0864847 A2 | 16-09-1998 |
| | | | JP | 11002511 A | 06-01-1999 |
| | | | US | 2001012388 A1 | 09-08-2001 |
| | | | US | 6286349 B1 | 11-09-2001 |
| US 3976382 | A | 24-08-1976 | NO | 406073 A | 20-05-1975 |
| | | | NO | 129169 B | 04-03-1974 |
| | | | DD | 109742 A5 | 12-11-1974 |
| | | | DE | 2356491 A1 | 16-05-1974 |
| | | | GB | 1449044 A | 08-09-1976 |
| | | | IT | 1002512 B | 20-05-1976 |
| | | | JP | 50006360 A | 23-01-1975 |
| | | | NL | 7315537 A | 16-05-1974 |
| | | | NO | 752580 A | 22-04-1975 |
| | | | SE | 403321 B | 07-08-1978 |

EPO FORM P0459

For more details about this annex : see Official Journal of the European Patent Office, No. 12/82